(19) Europäisches Patentamt
European Patent Office
Office européen des brevets

(11) Veröffentlichungsnummer : **0 083 015**
**B1**

(12) # EUROPÄISCHE PATENTSCHRIFT

(45) Veröffentlichungstag der Patentschrift : **07.11.84**

(51) Int. Cl.³ : **C 07 C145/02**, C 07 C147/12, A 01 N 47/04

(21) Anmeldenummer : **82111532.6**

(22) Anmeldetag : **13.12.82**

(54) **Neue Bis-(fluor- und chlormethyl-thioformamide) ein Verfahren zu ihrer Herstellung und ihre Verwendung.**

(30) Priorität : **24.12.81 DE 3151445**

(43) Veröffentlichungstag der Anmeldung : **06.07.83 Patentblatt 83/27**

(45) Bekanntmachung des Hinweises auf die Patenterteilung : **07.11.84 Patentblatt 84/45**

(84) Benannte Vertragsstaaten : **BE CH DE FR GB LI NL SE**

(56) Entgegenhaltungen : **EP-A- 0 008 731**

(73) Patentinhaber : **BAYER AG**
**Konzernverwaltung RP Patentabteilung**
**D-5090 Leverkusen 1 Bayerwerk (DE)**

(72) Erfinder : **Ritter, Helmut, Dr.**
**Hohenholz 32**
**D-5600 Wuppertal 1 (DE)**
Erfinder : **Paulus, Wilfried, Dr.**
**Deswatinesstrasse 90**
**D-4150 Krefeld (DE)**
Erfinder : **Genth, Hermann, Dr.**
**Am Heckerhof 60**
**D-4150 Krefeld 1 (DE)**

**EP 0 083 015 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft neue Bis-(fluor- und chlormethylthioformamide), ein Verfahren zu ihrer Herstellung und ihre Verwendung in mikrobiziden Mitteln.

Aus der DE-OS 2 838 750 sind N-sulfenylierte mono-Formanilide bekannt, die als Fungizide verwendet werden können. Da diese bekannten Verbindungen jedoch einen hohen Dampfdruck haben, ist ihre Verwendung nicht unbedenklich.

Es wurden neue Bis-(fluor- und chlormethyl-thio-formamide) der Formel

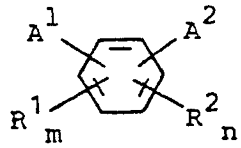

(I)

in der

$A^1$ und $A^2$ gleich oder verschieden sind und für den Rest

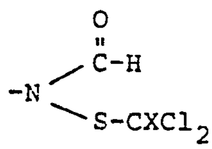

oder den Rest

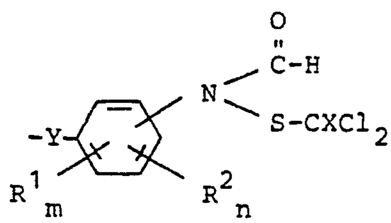

stehen, wobei

$R^1$ einen gegebenenfalls durch Halogen substituierten niederen Alkyl- oder Alkoxyrest oder Acetyl bedeutet,

$R^2$ Fluor, Chlor oder Nitril bedeutet,

m und n unabhängig voneinander für eine der Zahlen 0, 1 oder 2 steht,

X Fluor oder Chlor bedeutet und

Y für ein Brückenglied der Formel

$-CH_2-$ , 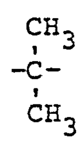 , $-SO-$, $-SO_2-$ oder 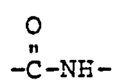

steht, gefunden.

Die neuen Bis-(fluor- und chlormethyl-thioformamide) haben einen niedrigen Dampfdruck und lassen sich ohne Probleme insbesondere in Innenräumen verwenden. Außerdem haben sie im Vergleich zu den aus der DE-OS 2 838 750 bekannten Verbindungen eine größere mikrobizide Wirkung.

Niedere Alkylreste bedeuten erfindungsgemäß geradkettige oder verzweigte Kohlenwasserstoffreste mit 1 bis etwa 6 Kohlenstoffatomen. Beispielsweise seien die folgenden Reste genannt : Methyl, Ethyl, Propyl, Isopropyl, Butyl, Isobutyl, Pentyl, Isopentyl, Hexyl und Isohexyl. Bevorzugte niedere Alkylreste sind der Methyl- und der Ethylrest.

Niedere Alkoxyreste bedeuten erfindungsgemäß über Sauerstoff gebundene, geradkettige oder verzweigte Kohlenwasserstoffreste mit 1 bis etwa 6 Kohlenstoffatomen. Beispielsweise seien die folgenden Reste genannt : Methoxy, Ethoxy, Propoxy, Isopropoxy, Butoxy, Isobutoxy, Pentoxy, Isopentoxy, Hexoxy und Isohexoxy. Bevorzugte niedere Alkoxyreste sind der Methoxy- und der Ethoxyrest.

Die niederen Alkyl- und Alkoxyreste können gegebenenfalls durch Halogen substituiert sein. Halogen

bedeutet Fluor, Chlor, Brom und Jod, bevorzugt Fluor und Chlor.

Bevorzugte durch Halogen substituierte niedere Alkyl- und Alkoxyreste sind Trifluormethyl- und Trifluormethyloxyreste.

Bevorzugt werden erfindungsgemäß Bis-(fluor- und chlormethyl-thioformamide) der Formeln

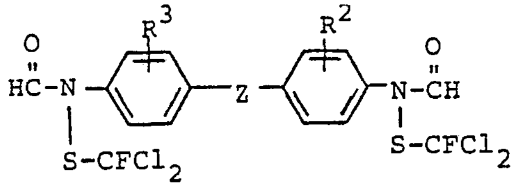

(II)

und

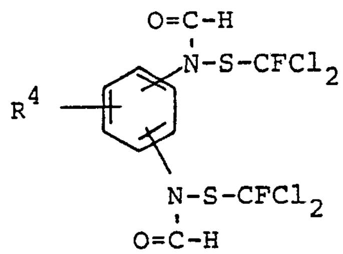

(III)

in denen

Z für die Reste

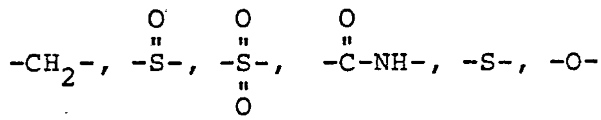

oder 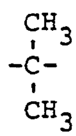 steht,

$R^3$ Wasserstoff oder Chlor bedeutet und

$R^4$ Wasserstoff, Methyl, Trifluormethyl, Nitro oder Chlor bedeutet.

Beispielsweise seien die folgenden neuen Bis-(fluor- und chlormethyl-thioformamide) genannt :

Bis(N-fluordichlormethylsulfenyl-4-formamido-phenyl)-methan
Bis(N-fluordichlormethylsulfenyl-4-formamido-phenyl)-sulfon
Bis(N-fluordichlormethylsulfenyl-4-formamido-phenyl)-sulfoxid
Bis(N-fluordichlormethylsulfenyl-4-formamido-phenyl)-ether
Bis(N-fluordichlormethylsulfenyl-4-formamido-phenyl)-thioether
N,N'-Bis(fluordichlormethylsulfenyl-formamido)-1,4-phenylen-diamin
N,N'-Bis(fluordichlormethylsulfenyl-formamido)-1,2-phenylen-diamin
N,N'-Bis(fluordichlormethylsulfenyl-formamido)-1,3-phenylen-diamin
N,N'-Bis-(1,3-fluordichlormethylsulfenyl-formamido)-4-methylbenzol
N,N'-Bis-(1,3-fluordichlormethylsulfenyl-formamido)-4-trifluormethylbenzol
N,N'-Bis-(1,3-fluordichlormethylsulfenyl-formamido)-4-Chlorbenzol
N,N'-Bis-(1,3-fluordichlormethylsulfenyl-formamido)-4-nitrobenzol
N,N'-Bis-(1,3-fluordichlormethylsulfenyl-formamido)-2,4-dichlorbenzol
N,N'-Bis-(1,4-fluordichlormethylsulfenyl-formamido)-2-methylbenzol
N,N'-Bis-(1,2-fluordichlormethylsulfenyl-formamido)-3,5-dimethylbenzol
N,N'-Bis-(1,2-fluordichlormethylsulfenyl-formamido)-4-methylbenzol.

Die neuen Bis-(fluor- und chlormethyl-thioformamide) können hergestellt werden, indem man Bis-formanilide der Formel

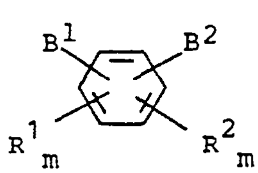

(IV)

in der

$B^1$ und $B^2$ gleich oder verschieden sind und für den Rest

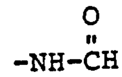

oder den Rest

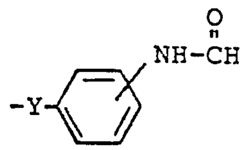

stehen, wobei

$R^1$, $R^2$, m, n und Y die obengenannte Bedeutung haben, mit einem Sulfenylchlorid der Formel

$$R{-}S{-}Cl \qquad (V)$$

in der

R Fluordichlormethyl oder Trichlormethyl bedeutet,

in Gegenwart eines säurebindenden Agens und eines Lösungsmittels im Temperaturbereich von 0 bis 40 °C umsetzt.

Die als Ausgangsverbindungen verwendeten Bis-formanilide können durch Umsetzung der aromatischen Diamine mit Ameisensäure (Houben-Weyl, Band 8, S. 654 (1952)) oder vorzugsweise durch Umsetzung der entsprechenden Diisocyanate mit wasserfreier Ameisensäure erhalten werden.

Als säurebindende Agentien des erfindungsgemäßen Verfahrens können Säurebindungsmittel eingesetzt werden, die unter den Reaktionsbedingungen den freiwerdenden Chlorwasserstoff binden. Beispielsweise seien genannt : Alkali- und Erdalkalihydroxide, wie Natriumhydroxid, Kaliumhydroxid, Magnesiumhydroxid und Calciumhydroxid, Alkali- und Erdalkalicarbonate, wie Natriumcarbonat, Kaliumcarbonat, Magnesiumcarbonat und Calciumcarbonat, Ammoniak, Amine, insbesondere tertiäre Amine der Formel

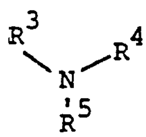

(VI)

in der

$R^3$, $R^4$ und $R^5$ gleich oder verschieden sind und für einen niederen, geradkettigen oder verzweigten Alkylrest (bis etwa 6 Kohlenstoffatomen) oder einen Phenylrest stehen.

Bevorzugte Basen sind Triethylamin und N,N-Dimethylbenzylamin.

Das erfindungsgemäße Verfahren kann in einem Lösungs- und/oder Verdünnungsmittel durchgeführt werden. Als Lösungs- und/oder Verdünnungsmittel seien inerte organische Lösungsmittel genannt, die sich unter den Reaktionsbedingungen nicht verändern. Beispielsweise seien Toluol, Dioxan, Aceton, tert.-Butanol oder Isopropanol genannt. Es ist außerdem möglich, das erfindungsgemäße Verfahren in wäßriger Lösung durchzuführen.

Die Ausgangsprodukte des erfindungsgemäßen Verfahrens werden im allgemeinen in äquivalenten Mengen eingesetzt. Es ist selbstverständlich möglich, die eine oder die andere Reaktionskomponente im Überschuß, beispielsweise bis zu 2 Mol, einzusetzen.

Das Lösungs- und/oder Verdünnungsmittel wird im allgemeinen in einer Menge von 20 bis 80 Gew.-%, bezogen auf das Fluor- und Chlormethyl-Thioformamid eingesetzt.

Das erfindungsgemäße Verfahren kann beispielsweise wie folgt durchgeführt werden :

Das Bis-formanilid wird gegebenenfalls in einem Lösungsmittel verdünnt und dem Reaktionsgefäß vorgelegt. Anschließend werden gleichzeitig das Sulfensäurechlorid und das säurebindende Agens zugegeben und nach beendeter Reaktion mit Wasser gewaschen. Dann wird die organische Phase mit dem erfindungsgemäßen Endprodukt abgetrennt.

Die erfindungsgemäßen Bis-(fluor- und chlormethyl-thioformamide) können als Wirkstoffe zur Bekämpfung von Mikroorganismen, vorzugsweise in technischen Materialien, verwendet werden.

Technische Materialien sind nicht lebende Materialien, die für die Verwendung in der Technik zubereitet worden sind. Beispielsweise können technische Materialien die durch den erfindungsgemäßen Wirkstoff vor einer mikrobiellen Veränderung und Zerstörung geschützt werden sollen, Klebstoffe, Leime, Papiere und Kartone, Textilien, Leder, Holz, Anstrichmittel, Baustoffe, Kautschuke und Kunststoffartikel, Kühlschmiermittel und andere Materialien sein, die durch Mikroorganismen zersetzt werden können. Im

Rahmen der zu schützenden Materialien seien auch Teile von Produktionsanlagen, beispielsweise Kühlwasserkreisläufe, genannt, die durch Mikroorganismen beeinträchtigt werden können. Im Rahmen der vorliegenden Erfindung seien als technische Materialien vorzugsweise Anstrich- und Imprägniermittel für Holz genannt.

Mikroorganismen, die einen Abbau oder eine Veränderung der technischen Materialien bewirken können, sind beispielsweise Bakterien, Pilze, Hefen, Algen und Schleimorganismen. Vorzugsweise wirken die erfindungsgemäßen Bis-(fluor- und chlormethyl-thioformamide) gegen Pilze.

Es seien beispielsweise Mikroorganismen der folgenden Gattungen genannt :

Coniophora, wie Coniophora puteana,
Lentinus, wie Lentinus tigrinus,
Pullularia, wie Aureobasidium pullulans,
Sclerophoma, wie Sclerophoma pityophila,
Aspergillus, wie Aspergillus niger,
Alternaria, wie Alternaria tenuis,
Chaetomium, wie Chaetomium globosum,
Polyporus, wie Polyporus versicolor,
Penicillium, wie Penicillium glaucum,
Trichoderma, wie Trichoderma viride.

Je nach ihrem Anwendungsgebiet können die erfindungsgemäßen Bis-(fluor- und chlormethylthioamino-formamide) in die üblichen Formulierungen überführt werden, wie Lösungen, Emulsionen, Suspensionen, Pulver, Pasten und Granulate. Diese können in an sich bekannter Weise hergestellt werden, z. B. durch Vermischen der Wirkstoffe mit einem Streckmittel, aus flüssigem Lösungsmittel und/oder festen Trägerstoffen, gegebenenfalls unter Verwendung von oberflächenaktiven Mitteln, wie Emulgatoren und/oder Dispergiermitteln, wobei beispielsweise im Falle der Benutzung von Wasserstreckmitteln, gegebenenfalls organische Lösungsmittel als Hilfsmittel verwendet werden können.

Flüssige Lösungsmittel der Wirkstoffe können z. B. Alkohole, beispielsweise niedere aliphatische Alkohole, vorzugsweise Ethanol und Isopropanol, und aromatische Alkohole, wie Benzylalkohol, flüssige Kohlenwasserstoffe, wie Benzinfraktionen, chlorierte Kohlenwasserstoffe, wie 1,2-Dichlorethan, Ester wie Diethylenglykoldiacetat oder Ethylacetat, Ketone wie Cyclohexanon oder Aceton, Dimethylformamid oder Dimethylsulfoxid sein.

Feste Trägerstoffe, die bei der Herstellung der fertigen Anwendungsformen des Wirkstoffes zugegeben werden, können beispielsweise feinteilige Aluminiumoxide, Silikate, Carbonate, Eisenoxide, Gips oder Holzmehl sein.

Oberflächenaktive Mittel können handelsübliche Emulgatoren, wie Aryl- und Alkylsulfonate ; ethoxylierte Alkylphenole, -Fettsäuren, -Fettalkohole oder -Alkylamine oder Dispergiermittel, wie Polycarbonsäuren, Polyvinylalkohol, Lignin, Sulfitablaugen oder Methylcellulose sein.

Anwendungsformen der erfindungsgemäßen mikrobiziden Mittel enthalten im allgemeinen 0,1 bis 95 Gew.-%, bevorzugt 0,5 bis 90 Gew.-%, der erfindungsgemäßen Bis-(fluor- und chlor-methyl-thioformamide) als Wirkstoff.

Die für den Schutz technischer Materialien erforderlichen Wirkstoffmengen können in größeren Bereichen variiert werden. Im allgemeinen liegen sie im Bereich von 0,001 bis 5 Gew.-%, vorzugsweise im Bereich von 0,01 bis 2 Gew.-%, bezogen auf die Gesamtmenge des zu schützenden Materials.

Die erfindungsgemäßen Wirkstoffe können in den Formulierungen in Mischungen mit anderen bekannten anorganischen und organischen Fungiziden, Bakteriziden und/oder Insektiziden vorliegen. Beispielsweise seien die folgenden Wirkstoffe genannt : Benzimidazolylmethylcarbamat, Tetramethylthiuramdisulfid, p-Chlor-m-kresol, 1-[Chlorphenyl-bis-(phenyl)-methyl]-imidazol, Parathion, Streptomycin.

## Beispiel 1

Herstellung (Verbindung 1)

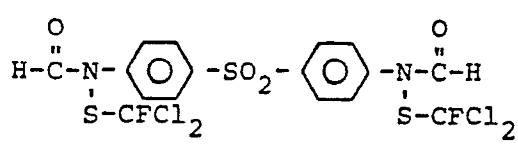

30,4 g Bis-(4-formamidophenyl)-sulfon (0,1 Mol) werden in 150 ml getrocknetem Ethylacetat vorgelegt und bei 0 °C innerhalb 30 Minuten 33,8 g (0,2 Mol) Dichlorfluormethansulfenylchlorid zugetropft. Anschließend werden 20,2 g (0,2 Mol) Triethylamin innerhalb 30 Minuten bei 0 °C zugetropft. Der Ansatz wird 2 Stunden bei 22 °C gehalten und dann abfiltriert. Der Feststoff wird mit Ethanol aufgeschlämmt, in Eiswasser gegeben und erneut abfiltriert und getrocknet.

Ausbeute : 43 g
Schmelzpunkt : 177 °C
Cl ber. : 24,8 % ; gef. : 24,0 %.
Das Produkt ist in Aceton und DMF löslich.

Beispiel 2

Herstellung (Verbindung 2)

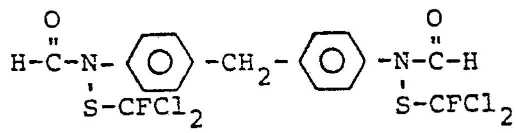

24,4 g (0,1 Mol) Bis-(4-formamidophenyl) methan werden in 150 ml getrocknetem Ethylacetat vorgelegt und bei 0 °C innerhalb 1 Stunde 33,8 g (0,2 Mol) Dichlorfluormethansulfenylchlorid zugetropft. Anschließend werden 22,8 g (0,23 Mol) Triethylamin bei 0 °C innerhalb von 20 Minuten zuge tropft. Der Ansatz wird 1 Stunde bei 20 °C gerührt. Danach wird analog Beispiel 1 aufgearbeitet.
Ausbeute : 40 g
Schmelzpunkt : 107 °C
Cl ber. : 27,3 % ; gef. : 26,9 %.
Das Produkt ist in Aceton, DMF und Toluol löslich.

Beispiel 3

Herstellung (Verbindung 3)

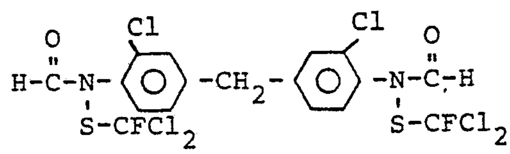

16,2 g (0,05 Mol) Bis-(3-chlor-4-formamidophenyl) methan werden in 100 ml getrocknetem Methylenchlorid vorgelegt und bei ca. 10 °C 16,9 g (0,1 Mol) Dichlorfluormethansulfenylchlorid innerhalb 15 Minuten zugetropft. Anschließend werden 10 g (0,1 Mol) Triethylamin innerhalb von 45 Minuten bei ca. 16 °C zugetropft. Der Ansatz wird 1 Stunde bei 40 °C gehalten, dann mit 3 × 50 ml dest. Wasser behandelt, abfiltriert und das Lösungsmittel abdestilliert. Der Rückstand wird in Aceton gelöst mit Wasser ausgefällt. Es wird abfiltriert und getrocknet. Es resultiert ein harziges Produkt, das z. B. in Aceton, Ethylacetat oder Toluol löslich ist.
Ausbeute : 20 g
Cl ber. : 35,5 % ; gef. : 34,9 %.

Beispiel 4

Herstellung (Verbindung 4)

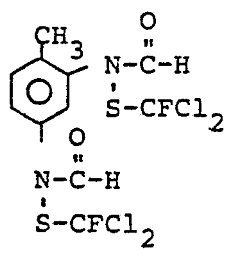

Es werden 35,6 g (0,2 Mol) 2,5-Diformamido-toluol in 100 ml getrocknetem Methylenchlorid vorgelegt und bei 20 °C 67,6 g (0,4 Mol) Dichlorfluormethansulfenylchlorid innerhalb 45 Minuten zugetropft. Anschließend werden 40 g (0,4 Mol) Triethylamin bei 20 °C innerhalb 1 Stunde 15 Minuten zugetropft. Die Temperatur wird mittels eines Kühlbades gehalten. Der Ansatz wird nun 1 Stunde bei 20 °C gerührt, anschließend abfiltriert, mit 2 × 100 ml dest. Wasser ausgeschüttelt, die organische Phase abgetrennt, mit Natriumsulfat getrocknet und das Methylenchlorid am Rotationsverdampfer abdestilliert. Als Rückstand bleiben 74,5 g eines Harzes, das in Aceton, Methylenchlorid, Toluol, Methanol, Ethylacetat und geringfügig in Testbenzin löslich ist.
Cl ber. : 31,9 % ; gef. : 31,6 %.

Beispiel 5

In einen Agar, der aus Bierwürze und Pepton hergestellt wurde, wurden erfindungsgemäße Verbindungen jeweils in abgestuften Konzentrationen zwischen 1 und 5 000 mg/l je Versuchsprobe eingearbeitet. Nach dem Erstarren des Agars erfolgte die Kontamination der so hergestellten Agarproben mit Reinkulteren verschiedener Testpilze (s. Tabelle).

Nach zweiwöchiger Lagerung bei 28 °C und 60 bis 70 % relativer Luftfeuchtigkeit wurde ausgewertet. In der Tabelle 2 ist als minimale Hemmkonzentration (MHK) die geringste in einer Agarprobe enthaltende Konzentration einer Substanz angegeben, bei der keinerlei Bewuchs durch die verwendete Art erfolgte.

| Testorganismen | MHK-Werte von Bis-(fluor- und chlormethyl-thioamino-formamiden) in mg/l gemäß Beispiel Nr. | | |
|---|---|---|---|
| | 1 | 2 | 4 |
| Penicillium glaucum | 500 | 350 | 10 |
| Chaetomium globosum | 200 | 100 | 20 |
| Aspergillus niger | 750 | 350 | 20 |
| Alternaria tenuis | 20 | < 10 | 5 |
| Aureobasidium pullulans | 200 | 35 | 10 |
| Sclerophoma pityophila | 200 | 35 | 15 |
| Lentinus tigrinus | < 10 | <10 | 1,5 |
| Polyporus versicolor | 350 | 50 | 5 |
| Coniophora puteana | | <10 | 1,5 |

**Ansprüche**

1. Bis-(fluor- und chlormethyl-thioformamide) der Formel

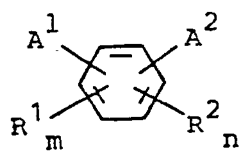

in der

$A^1$ und $A^2$ gleich oder verschieden sind und für den Rest

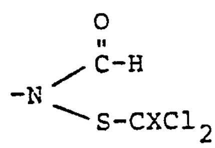

oder den Rest

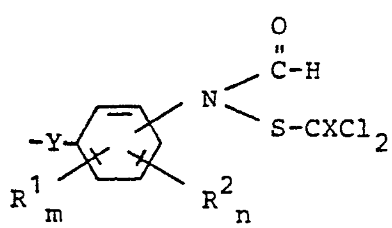

stehen, wobei

$R^1$ einen gegebenenfalls durch Halogen substituierten niederen Alkyl- oder Alkoxyrest oder Acetyl bedeutet,

$R^2$ Fluor, Chlor oder Nitril bedeutet,

m und n unabhängig voneinander für eine der Zahlen 0, 1 oder 2 steht,

X Fluor oder Chlor bedeutet und

Y für ein Brückenglied der Formel

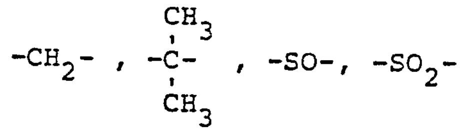 oder 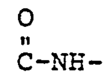

steht.

2. Verfahren zur Herstellung von Bis-(fluor- und chlormethyl-thioformamide), dadurch gekennzeichnet, daß man ein Bis-formanilid der Formel

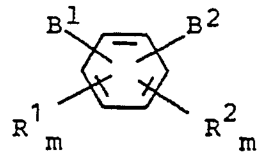

in der

$B^1$ und $B^2$ gleich oder verschieden sind und

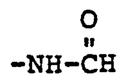

für den Rest
oder den Rest

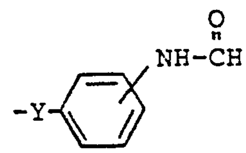

stehen, wobei

$R^1$, $R^2$, m, n und Y die obengenannte Bedeutung haben,
mit einem Sulfenylchlorid der Formel

R—S—Cl

in der

R Fluordichlormethyl oder Trichlormethyl bedeutet,
in Gegenwart eines säurebindenden Agens und eines Lösungsmittels im Temperaturbereich von 0 bis 40 °C umsetzt.

3. Verfahren nach Anspruch 2, dadurch gekennzeichnet, daß man als säurebindendes Agens Triethylamin oder N,N-Dimethyl-benzylamin verwendet.

4. Mikrobizide Mittel enthaltend Bis-(fluor- und chlormethyl-thioformamide) der Formel

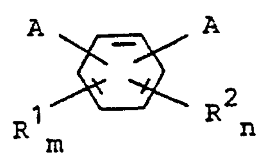

in der

A für den Rest

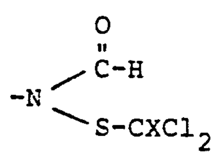

oder den Rest

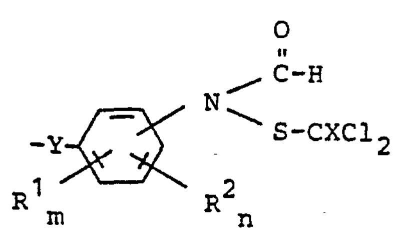

steht, wobei

$R^1$ einen gegebenenfalls durch Halogen substituierten niederen Alkyl- oder Alkoxyrest oder Acetyl bedeutet,

$R^2$ Fluor, Chlor oder Nitril bedeutet,

m und n unabhängig voneinander für eine der Zahlen 0, 1 oder 2 steht,

X Fluor oder Chlor bedeutet und

Y für ein Brückenglied der Formel

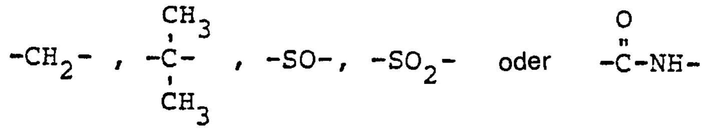
oder

steht.

5. Verwendung der mikrobiziden Mittel gemäß Anspruch 4, zum Schutz technischer Materialien.

**Claims**

1. Bis-(fluoro- and chloromethyl-thioformamides) of the formula

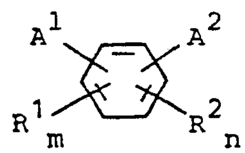

in which

$A^1$ and $A^2$ are identical or different and represent the radical

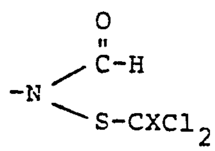

or the radical

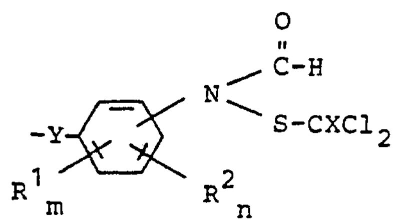

wherein

$R^1$ denotes an optionally halogen-substituted lower alkyl or alkoxy radical or acetyl,

$R^2$ denotes fluorine, chlorine or nitrile,

m and n, independently of one another, represent one of the numbers 0, 1 or 2,

X denotes fluorine or chlorine and

Y represents a bridge member of the formula

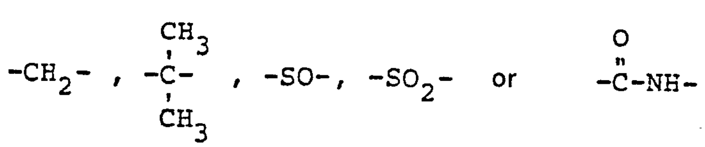
or

2. Process for the preparation of bis-(fluoro- and chloromethylthioformamides), characterised in that a bis-formanilide of the formula

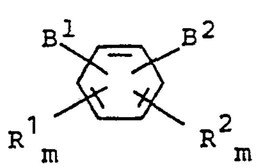

in which

$B^1$ and $B^2$ are identical or different and represent the radical

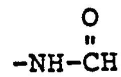

or the radical

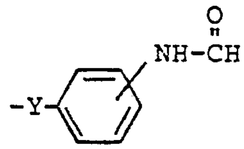

wherein

$R^1$, $R^2$, m, n and Y have the above-mentioned meaning, is reacted with a sulphenyl chloride of the formula

R—S—Cl

in which

R denotes fluorodichloromethyl or trichloromethyl,

in the presence of an acid-binding agent and a solvent in the temperature range of 0 to 40 °C.

3. Process according to Claim 2, characterised in that the acid-binding agent used is triethylamine or N,N-dimethylbenzylamine.

4. Microbicidal agents containing bis-(fluoro- and chloromethyl-thioformamides) of the formula

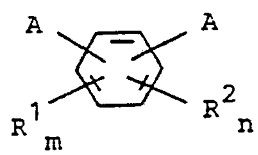

in which

A represents the radical

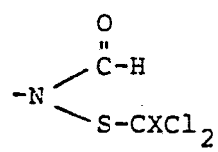

or the radical

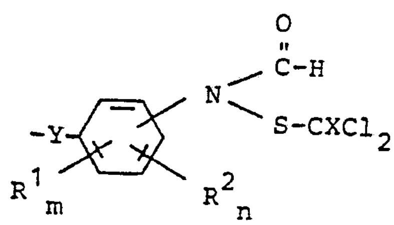

wherein

$R^1$ denotes an optionally halogen-substituted lower alkyl or alkoxy radical or acetyl,

$R^2$ denotes fluorine, chlorine or nitrile,

m and n, independently of one another, represent one of the numbers 0, 1 or 2,

X denotes fluorine or chlorine and

Y represents a bridge member of the formula

$-CH_2-$ , 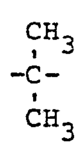 , $-SO-$, $-SO_2-$ or 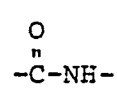

5. Use of the microbicidal agents according to Claim 4 for the protection of industrial materials.

**Revendications**

1. Bis-(fluoro- et chloro-méthyl-thioformamides) de formule

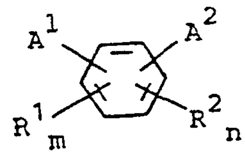

dans laquelle

$A^1$ et $A^2$ sont identiques ou différents et représentent chacun le radical

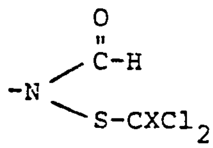

ou le radical

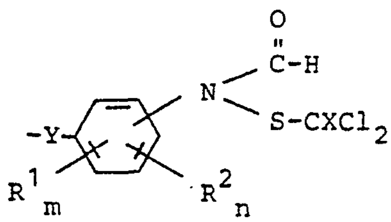

où

$R^1$ représente un groupe acétyle, ou un groupe alcoxy ou alkyle inférieur éventuellement substitué par un halogène,

$R^2$ représente un atome de fluor, un atome de chlore ou un groupe nitrile,

m et n représentent chacun indépendamment l'un de l'autre un des nombres 0, 1 et 2,

X représente un atome de fluor ou de chlore, et

Y représente un terme en pont de formule

$-CH_2-$ , 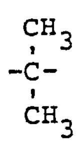 , $-SO-$, $-SO_2-$ ou 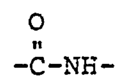

2. Procédé de préparation de bis-(fluoro- et chloro-méthyl-thioformamides), caractérisé en ce qu'on fait réagir un bis-formanilide de formule

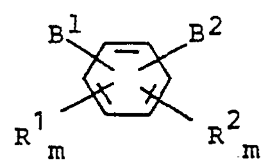

dans laquelle

$B^1$ et $B^2$ sont identiques ou différents et représentent chacun le radical

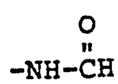

ou le radical

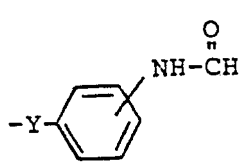

$R^1$, $R^2$, m, n et Y ayant les significations indiquées ci-dessus, avec un chlorure de sulfényle de formule

R—S—Cl

dans laquelle

R représente le groupe fluorodichlorométhyle ou le groupe trichlorométhyle,

en présence d'un agent fixateur d'acide et d'un solvant à une température se situant dans l'intervalle allant de 0 à 40 °C.

3. Procédé suivant la revendication 2, caractérisé en ce que, comme agent fixateur d'acide, on utilise la triéthylamine ou la N,N-diméthyl-benzylamine.

4. Agents microbicides contenant des bis-(fluoro- et chloro-méthyl-thioformamides) de formule

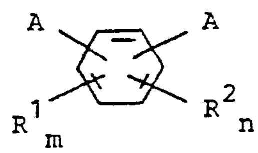

dans laquelle

A représente le radical

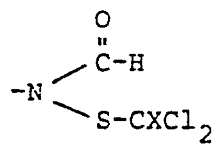

ou le radical

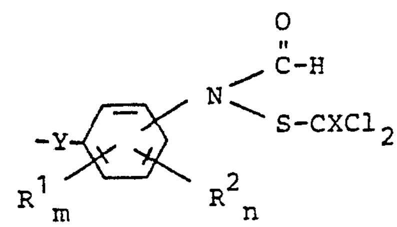

où

$R^1$ représente un groupe acétyle, ou un groupe alcoxy ou alkyle inférieur éventuellement substitué par un halogène,

$R^2$ représente un atome de fluor, un atome de chlore ou un groupe nitrile,

m et n représentent chacun indépendamment l'un de l'autre un des nombres 0, 1 et 2,

X représente un atome de fluor ou un atome de chlore, et

Y représente un terme en pont de formule

$-CH_2-$ , 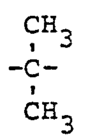 , -SO-, $-SO_2-$ ou 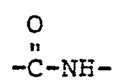

5. Utilisation des agents microbicides suivant la revendication 4 pour protéger des matières techniques.